# EUROPÄISCHE PATENTSCHRIFT

(11) **EP 1 581 379 B1**
(45) Veröffentlichungstag und Bekanntmachung des Hinweises auf die Patenterteilung: **04.05.2011**
(21) Anmeldenummer: 03814469.7
(22) Anmeldetag: 27.12.2003
(51) Int. Cl.: B29C 69/00, B29D 22/00, B29C 53/02, B60R 13/02

(54) **VERFAHREN ZUM HERSTELLEN EINES FORMTEILS AUS EINEM TEXTILEN FLÄCHENGEBILDE**
METHOD OF FABRICATION OF A MOULDED PART MADE OF A PLANAR TEXTILE STRUCTURE
MÉTHODE DE FABRICATION D'UNE PIÈCE MOULÉE À PARTIR D'UNE STRUCTURE TEXTILE PLANE

(30) Priorität: 07.01.2003 DE 10300121
(43) Veröffentlichungstag der Anmeldung: 05.10.2005
(73) Patentinhaber: Johann Borgers GmbH & Co. KG, 46393 Bocholt (DE)
(72) Erfinder: SIEBEN, Holger, 46395 Bocholt (DE)
(74) Vertreter: Mentzel, Norbert
(86) Internationale Anmeldenummer: PCT/EP2003/014924
(87) Internationale Veröffentlichungsnummer: WO 2004/060639

(56) Entgegenhaltungen:
- AT-B- 375 296
- DE-A- 4 444 880
- DE-A- 19 853 246
- GB-A- 955 497

## Beschreibung

Die Erfindung richtet sich auf ein Verfahren gemäß Anspruch 1. Die dazu verwendeten textilen Flächengebilde bestehen aus Vliesstoff oder aus einem Nadelfilz. Die Formteile entstehen in einem aus einem Ober- und Unterwerkzeug bestehenden Presse. Das textile Flächengebilde wird zwischen die beiden Werkzeugteile gelegt und diese dann gegeneinander gefahren. Das textile Flächengebilde ist mit einem Binder versehen, welcher die textilen Fasern miteinander verbindet. Dazu ist die Presse bedarfsweise beheizt, bzw. gekühlt. Nach dem Pressvorgang behält das Formteil die ihm durch die Pressenwerkzeuge aufgeprägte Gestalt.

Solche Formteile werden zur Ausstattung von Fahrzeugen verwendet. Die Herstellung schalenförmiger Formteile großer Tiefe ist schwierig und materialaufwendig. So ist die Tiefe des schalenförmigen Produkts bisher durch die Tiefziehfähigkeit des textilen Flächengebildes begrenzt gewesen. Bei sehr tiefer Verformung reißt das Flächengebilde. Ein hoher Materialaufwand ergibt sich, weil man bei einer großen Formtiefe von einem Flächengebilde mit ausreichend hohem Einsatzgewicht ausgehen musste. Dadurch kommt es, dass die bekannten Formteile mit großer Schalentiefe stets ein verhältnismäßig hohes Stückgewicht aufweisen.

Aus der DE 198 53 246 A1 ist es bekannt, eine Sonnenblende für Kraftfahrzeuge als Oberschale und als Unterschale nebeneinanderliegend gemeinsam in einem zweiteiligen Werkzeug herzustellen. Das Flächengebilde wird zwischen den beiden Schalen beim Formen ausgedünnt, so dass dort ein Filmscharnier entsteht, welches die Biegelinie beim Zusammenklappen der Schalen bildet. An den Umrissrändern der beiden Schalen entstehen nach innen weisende Flansche mit einem U-Profil. Separat wird ein in sich klappbarer Einlegerahmen hergestellt und mit seinen Rahmenstegen ins U-Profil-Innere der beiden Schalen eingeschoben. Nach dem Zusammenklappen der beiden Schalen werden die nach innen weisenden U-Schenkel dieser Flansche miteinander verklebt. Dadurch entsteht eine in sich geschlossene Kapsel, welche die Sonnenblende bildet. Der Rahmen füllt das Innere der Sonnenblende aus. Die zugeklappte, fertige Sonnenblende hat nur eine verhältnismäßig kleine Höhe zwischen der Oberwand und Unterwand der miteinander verklebten Schalen. Das Flächengebilde braucht zur Ausbildung der Oberschale und Unterschale nur minimal tiefgezogen zu werden. Ob und wie man mit diesem Verfahren auch topfförmige Formteile großer Tiefe herstellen kann, ist nicht erkennbar. Ein Tiefziehen von Formteilen mit relativ hoher Tiefe verursacht erhebliche Kosten, weil das dazu verwandte Werkzeug gleich tiefe Ausmaße haben muss. Die beiden Hälften des Formteils sind beim Tiefziehen um 180° auseinandergeklappt und somit muss die Tiefe des Werkzeugs mindestens gleich der Tiefe des herzustellenden Formteils betragen. Diese Herstellungsweise ist kostentechnisch nicht zu empfehlen. Ebenso wird bei dieser Druckschrift ein Verfahren mit Hilfe von Thermofusion beschrieben, welches erhebliche Mengen an Energie verbraucht, um das Formteil zu fertigen. Zusarrimengenommen entstehen beim Formen von tiefen Formteilen viel zu hohe Kosten, nach dem in dieser Druckschrift beschriebenen Verfahren.

Die AT 375 296 B befasst sich mit der Herstellung einer Rohrisolation aus Polyurethanschaum. Es wird ein Werkzeug verwendet, das aus zwei gegeneinander klappbaren Hälften besteht. Im Aufklappzustand dieses Werkzeugs wird eine aus Polyurethanschaum gebildete Schaumstoffplatte darüber gelegt und durch Anlegen

Aus der DE 44 44 880 A1 ist es bekannt, als Flächengebilde Vliesstoffe zu verwenden, um in Presswerkzeugen Formteile herzustellen.

Solche aus Vliesstoff oder Nadelfilz bestehende Formteile werden zur Ausstattung von Fahrzeugen verwendet. Die Herstellung topfförmiger Formteile mit großer Tiefe ist schwierig und materialaufwendig. Solche textilen Flächengebilde lassen sich nur bis zu einer bestimmten Tiefe im Tiefziehverfahren herstellen. Die maximal zulässige Tiefziehfähigkeit derartiger Flächengebilde würde die Herstellung eines Formteils großer Tiefe ausschließen. Bei sehr tiefer Verformung eines Topfes reißt der Vliesstoff oder der Nadelfilz. Um große Formtiefen eines Topfes zu erhalten, müssten Vliesstoffe bzw. Nadelfilze mit entsprechend hohem Flächengewicht verwendet werden, was einen hohen Materialaufwand und damit hohe Kosten für die Herstellung topfförmiger Formteile verursachen würde. Dieser hohe Materialaufwand würde schließlich auch ein hohes Stückgewicht eines solchen fertigen Topfes bedingen, was ebenfalls unerwünscht wäre.

Aus der US 2,800,945 ist ein Verfahren zum Herstellen eines Formteils aus Fasern mit 1% bis 25% Harz bekannt, indem aus dem Flächengebilde zunächst in nebeneinanderliegenden Werkzeug-Abschnitten eines Werkzeugs zwei Formteilhälften geformt werden. Im Flächengebilde zwischen den beiden Formteil-Hälften wird eine Biegelinie gebildet. Das Material aus der Schrift wird aber nicht tiefgezogen.

Der Erfindung liegt die Aufgabe zugrunde ein Verfahren ein Herstellung eines Formteils gemäß Anspruch 1, der sich bei großer Formtiefe durch ein überraschend kleines Einsatzgewicht auszeichnet. Dabei soll die gewünschte Mindestwandstärke erhalten bleiben.

Die Erfindung gliedert das Formteil durch zwei Trennfugen in mindestens zwei Formsegmente, die durch eine lineare Biegelinie im textilen Flächengebilde miteinander verbunden sind. Diese Biegelinie fungiert als Klappachse, um welches die Formsegmente zwischen einer Aufklapplage und einer Zuklapplage gegeneinander beweglich sind. Die Herstellung des Formteils erfolgt in der Aufklapplage der beiden Formsegmente. Die Teilbreite der beiden Formsegmente bestimmt dann die Formtiefe des textilen Flächengebildes in den Pressenwerkzeugen und ist wesentlich kleiner als die Schalentiefe des fertigen Formteils. Das fertige Formteil mit hoher Schalentiefe ergibt sich dann erst in der Zuklapplage der Formsegmente. Dann kommen die beiden Trennfugen miteinander in Berührung. Die Dimension der Schalentiefe ist nicht mehr durch die Formtiefe des textilen Flächengebildes bestimmt und kann daher beliebig groß sein. Die Profilierung des Schalenbodens und der seitlichen Schalenwände kann beliebig sein. All dies ist möglich, weil das fertige Formteil mit seiner Schalentiefe nicht die Richtung des Tiefziehens vom textilen Flächengebilde bestimmt. Das Tiefziehen erfolgt diagonal oder quer zum Verlauf der Fugen. Bezogen auf das fertige Produkt erfolgt das Tiefziehen des Flächengebildes also in eine ganze andere, nämlich viel günstigere Richtung: der Teilquerschnitt der Formsegmente bestimmt die Formtiefe.

Weitere Maßnahmen und Vorteile der Erfindung ergeben sich aus den Unteransprüchen, der nachfolgenden Beschreibung und den Zeichnungen. In den Zeichnungen ist die Erfindung in mehreren Ausführungsbeispielen dargestellt. Es zeigen:
- Fig. 1,: schematisch, einen Längsschnitt durch ein Teilstück einer Fahrzeug-Karosserie mit einer napfförmigen Aufnahme, in welcher ein erfindungsgemäßes topfförmiges Formteil steckt, das nachfolgend kurz "Topf" genannt werden soll,
- Fig. 2: eine Seitenansicht des in Fig. 1 verwendeten Topfes, wenn sich dieser außerhalb der Fahrzeug-Karosserie befindet,
- Fig. 3: einen Querschnitt durch den Topf von Fig. 2, längs der dortigen Schnittlinie III - III,
- Fig. 3a,: in Vergrößerung, ein Detail der Fig. 3 in dem dort mit IIIa gekennzeichneten Bereich,
- Fig. 4,: schematisch, einen Längsschnitt durch die beiden Werkzeuge einer Presse, die zur Herstellung des in der Fig. 2 und 3 gezeigten Topfes dienen, wenn die Werkzeuge sich in Abstand zueinander befinden und ein textiles Flächengebilde zunächst in diesen Abstandsbereich gebracht wird,
- Fig. 5,: in einer der Fig. 4 entsprechenden Darstellung, den geschlossenen Zustand der Presse zwecks Herstellung des Topfes aus dem textilen Flächengebilde,
- Fig. 6,: in perspektivischer Darstellung, ein in der Presse von Fig. 5 erzeugtes Vorprodukt des Topfes,
- Fig. 7,: in perspektivischer Darstellung des aus dem Vorprodukt von Fig. 6 hergestellten Endprodukts, nämlich den bereits in Fig. 2 und 3 gezeigten Topf,
- Fig. 8 + 9,: in einem der Fig. 1 entsprechenden Längsschnitt zwei alternative Ausbildungen eines fertigen erfindungsgemäßen topfförmigen Formteils, wobei die Schnittführung für Fig. 9 durch die Schnittlinie IX - IX von Fig. 10 veranschaulicht ist, und
- Fig. 10: eine Seitenansicht des in Fig. 9 gezeigten dritten Ausführungsbeispiels, in Blickrichtung des Pfeils X von Fig. 9.

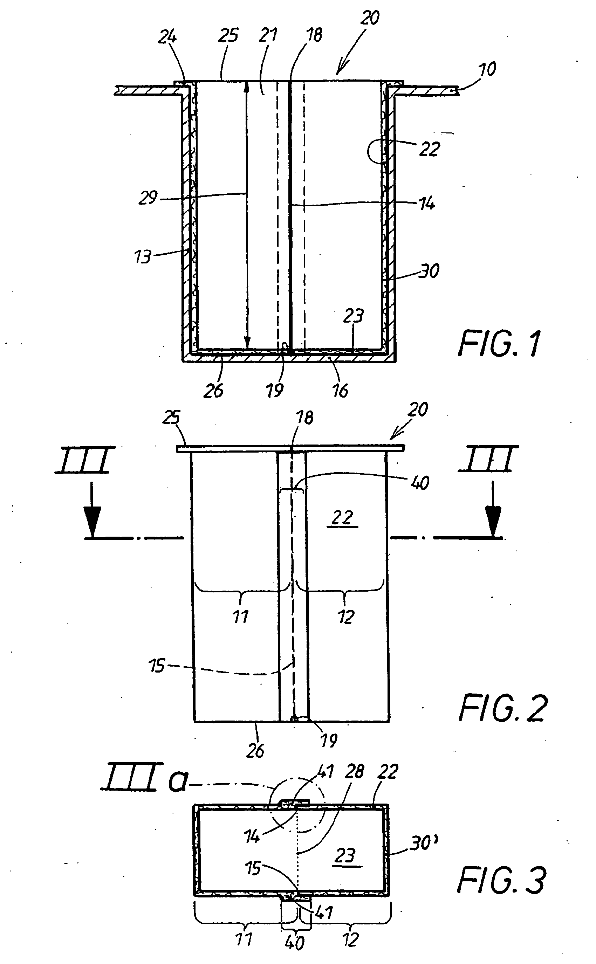

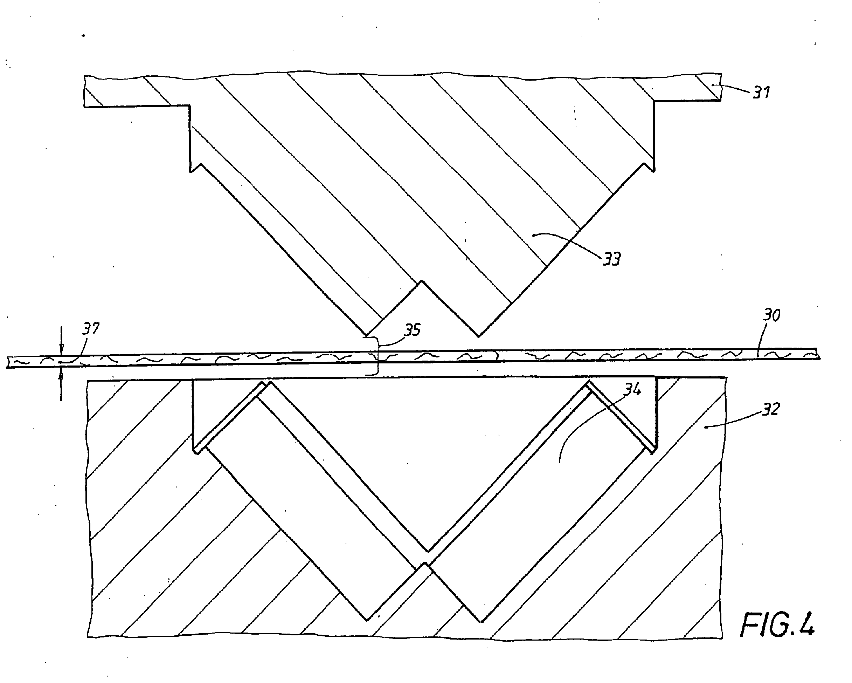

In Fig. 1 ist im Längsschnitt ein Teilstück einer Fahrzeug-Karosserie 10 gezeigt, welche mit einer napfförmigen Aufnahme 13 versehen ist. In dieser Aufnahme 13 soll ein topfförmiges Formteil 20 eingeführt werden, welches aus einem textilen Flächengebilde 30 gemäß Fig. 4 besteht. Dieses Flächengebilde 30 kann ein Vliesstoff oder ein Nadelfilz sein und besteht zunächst aus einer ebenen Bahn. Der Vliesstoff bzw. Nadelfilz ist mit einem Binder versehen. Der Topf 20 besitzt eine Topföffnung 21, die von Topfseitenwänden 22 umgrenzt ist. Bezogen auf die Gebrauchslage von Fig. 1 befindet sich die Topföffnung 21 am Außenende 25 des Formteils 20 und ist dort mit einem Randflansch 24 versehen. Der Topfboden 23 bestimmt dann das Innenende 26 des Topfes 20. In der Einstecklage von Fig. 1 stützt sich der Randflansch 24 an Oberflächen der Karosserie 10 ab, welche die napfförmige Aufnahme 13 umgrenzen. Der Topfboden 23 kann dabei am Napfboden 16 der Aufnahme 13 zu liegen kommen.

Das Formteil 20 ist mit zwei Trennfugen 14, 15 versehen, welche in Längsrichtung eines Paares von einander gegenüberliegender Topfseitenwänden 22 verlaufen. Wie Fig. 1 verdeutlicht, gehen die Trennfugen 14, 15 von der Topföffnung 21 aus. Dort befindet sich das äußere Fugenende 18. Im vorliegenden Fall erstrecken sich die Trennfugen 14, 15 über die ganze Topftiefe 29 des Topfes 20 und ihr inneres Fugenende 19 kommt, wie aus Fig. 1 hervorgeht, im Bereich des Topfbodens 23 zu liegen. Die Trennfugen 14, 15 erstrecken sich auch über den angeformten Randflansch 24.

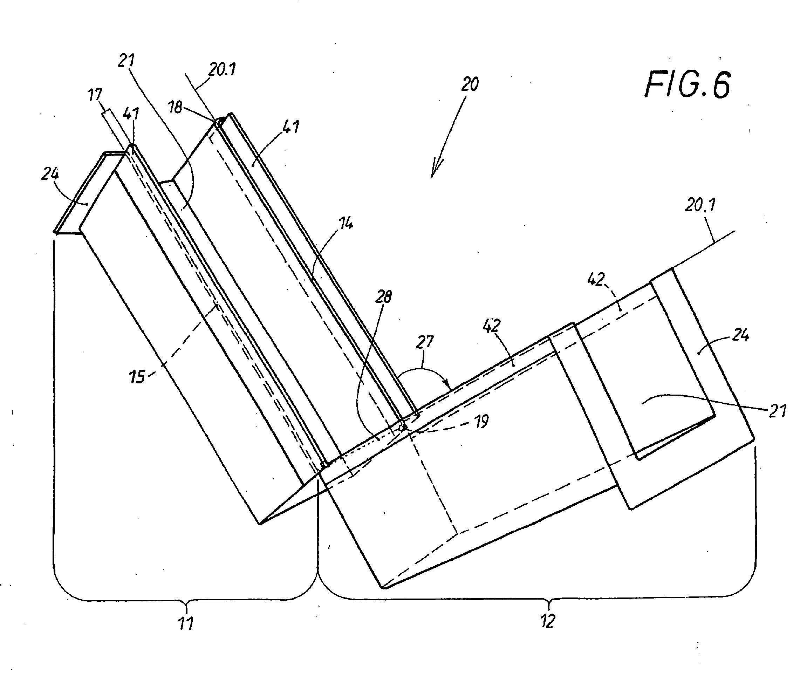

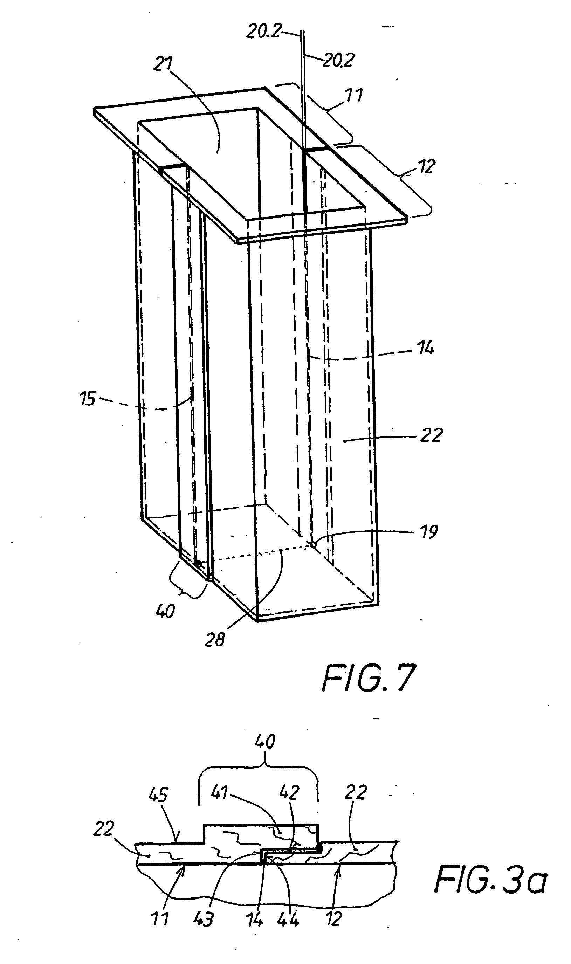

Durch die Trennfugen 14, 15 wird der Topf 20 in zwei, aus Fig. 6 ersichtliche Topfsegmente 11, 12 gegliedert, die im Sinne des Bewegungspfeils 27 von Fig. 6 zueinander klappbeweglich sind. Zwischen den inneren Fugenenden 19 der beiden Trennfugen 14, 15 verläuft nämlich die in Fig. 3 und 6 gepunktet verdeutlichte Biegelinie 28, welche jetzt als Klappachse fungiert. In Fig. 6 sind die beiden Topfsegmente 11, 12 in ihrer Aufklapplage dargestellt, was durch die Hilfslinien 20.1 mit dazwischen liegendem Aufklappwinkel verdeutlicht ist. Die Fig. 7 zeigt die Zuklapplage der beiden Topfsegmente. Die Trennfugen 14, 15 sind in Fig. 7 geschlossen. Die Zuklapplage ist durch die Hilfslinien 20.2 in Fig. 7 veranschaulicht.

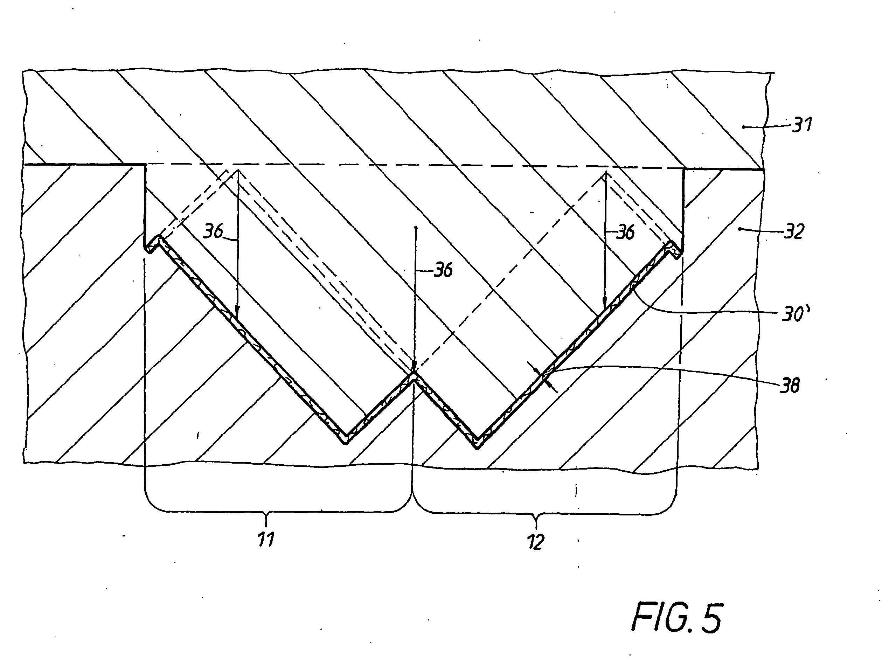

Der Topf 20 wird in besonderer Weise hergestellt, was anhand der Fig. 4 und 5 näher erläutert wird. Es ist dort das beheiz- oder kühlbare Ober- und Unterwerkzeug 31, 32 einer Presse gezeigt, in denen einerseits das patrizenförmige und andererseits das matrizenförmige Profil 33, 34 der beiden Topfsegmente 11, 12 angeformt bzw. eingelassen sind, und zwar in einer die vorerwähnte Aufklapplage 20.1 kennzeichnenden Position. Die Fig. 4 zeigt die Abstandslage zwischen den beiden Werkzeugen 31, 32. In den Abstandsbereich 35 wird das bereits erwähnte textile Flächengebilde 30 gelegt und dann die beiden Werkzeuge 31, 32 zusammengepresst. Das ist in Fig. 5 gezeigt. Das ursprünglich ebene Flächengebilde wird im Ausmaß der eingezeichneten Pfeile 36 tiefgezogen und gelangt in die von den beiden Topfsegmenten 11, 12 bestimmte Materialform 30', wo es unter Einwirkung von Temperatur und Druck zur Ausformung des planen textilen Flächengebildes kommt. Die Strecke 36 des Tiefziehens ist beträchtlich kleiner, als die gewünschte Topftiefe 29 des fertigen Topfes 20 von Fig. 1. Das Textilmaterial 30' wird daher beim Tiefziehen weniger beansprucht, als durch die gewünschte Topftiefe 29 nach dem Stand der Technik erforderlich wäre. Man kann daher, wie Fig. 4 zeigt, mit einer verhältnismäßig geringen Schichtdicke 37 arbeiten, die ein entsprechend geringes Einsatzgewicht des Vliesstoffs bzw. des Nadelfilzes 30 erfordert. Das verformte Material 30' von Fig. 5 besitzt eine ausreichend große Mindestwandstärke 38. Nach der Pressformung des textilen Flächengebildes erhält man das aus Fig. 6 ersichtliche Zwischenprodukt, nämlich die in abgewinkelter Aufklapplage 20.1 befindlichen Topfsegmente 11, 12.

Den gewünschten Topf 20 erhält man durch die aus Fig. 6 ersichtliche Zuklappbewegung 27 der beiden Topfsegmente 11, 12. Es ergibt sich die bereits beschriebene Zuklapplage 10.2 von Fig. 7. Im Bereich der beiden Trennfugen 14, 15 kommt es zu Überlappungen 40 des benutzten Textilmaterials 30'. Das ist in Fig. 3a näher dargestellt. An der Kante 43 des einen Topfsegments 11, welche die dortige Trennfuge 14 bestimmt, befindet sich ein über die Außenfläche der Schalenwand 22 sich erhebender Flansch 41. Diesem Flansch 41 ist eine vertiefte Abflachung 42 am Rand 44 des benachbarten Segments 12 angeordnet. In der Zuklapplage von Fig. 3a entstehen folglich im Bereich der Fugen 14 bzw. 15 keine Schallbrücken. Wie bereits erwähnt wurde, durchsetzen die Trennfugen 14, 15 auch den die Schalenöffnung 21 umgrenzenden Randflansch 24. Für eine einwandfreie Überlappung im Bereich dieser Randflansche 24 ist, wie Fig. 6 verdeutlicht, die Trennfuge des zum ersten Topfsegment 11 gehörenden Randflansch-Teilstücks 24 um die mit 17 gekennzeichnete Strecke gegenüber der Längskante des fugenseitigen Flansches 41 zurückgesetzt.

Weil der fertige Topf 20 in die Aufnahme 13 der Karosserie 10 gemäß Fig. 1 eingesteckt wird, wird an sich bereits dadurch die Zuklapplage 10.2 der beiden Formsegmente 11, 12 gewährleistet. Um dies zu unterstützen könnte man im Bereich der Überlappungen 40 bzw. der gegeneinander stoßenden Trennfugen 14, 15 Bindemittel einsetzen, z.B. Klebstoffe.

Wie aus Fig. 3 und 6 zu entnehmen ist, befinden sich die Flansche 41 für die beiden Trennfugen 14, 15 an dem gleichen Formsegment 11. Entsprechendes gilt für die Abflachungen 42, welche sich an dem zweiten Formsegment 12 befinden. Im vorliegenden Fall liegen die beiden Trennfugen 14, 15 fluchtend zueinander, wie aus Fig. 3 zu erkennen ist. In diesem Fall ist die beschriebene Biegelinie 28 sehr kurz. Es wäre bedarfsweise natürlich auch möglich diese Fugen 14, 15 zueinander zu versetzen. Im letztgenannten Fall wäre die Biegelinie 28 länger ausgebildet und verliefe schräg im Schalenboden 23. Die Trennfugen 14, 15 brauchen nicht linear ausgebildet zu sein oder senkrecht zum Schalenboden 23 verlaufen; sie könnten beliebig profiliert sein und in einem Neigungswinkel auf den Schalenboden 23 treffen.

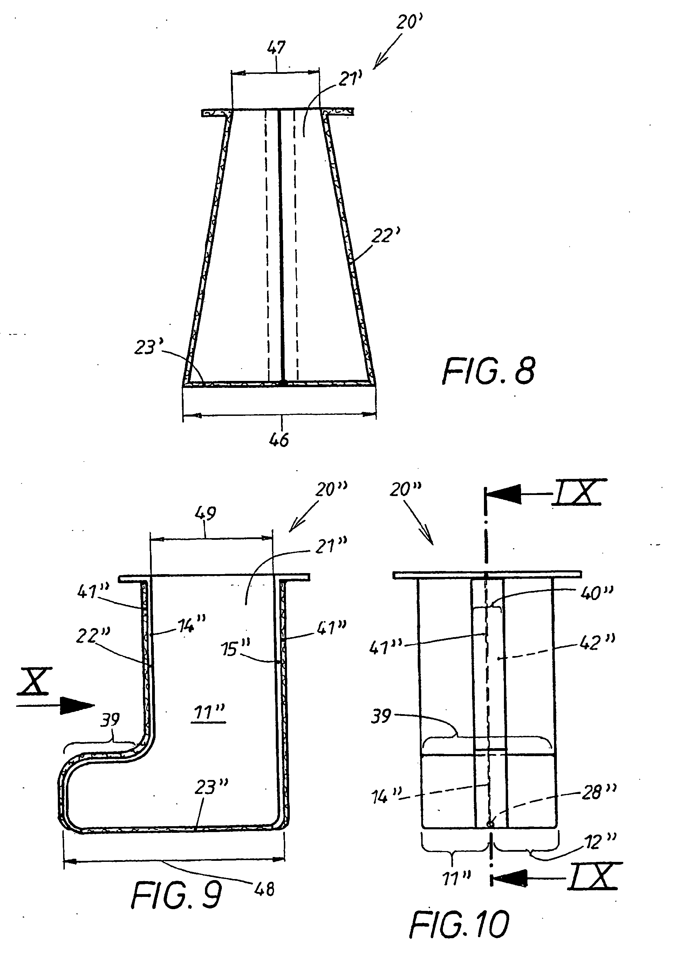

Der erfindungsgemäße Topf kann bedarfsweise andere Raumformen aufweisen, die sich durch die Herstellung der Topfsegmente 11, 12 in Aufklapplage 20.1 ohne weiteres ergeben. Ein solches zweites Ausführungsbeispiel zeigt Fig. 8, wo zur Benennung entsprechender Teile die gleichen Bezugszeichen wie im ersten Ausführungsbeispiel verwendet sind. Zur Unterscheidung davon sind sie aber mit einem Strich (') versehen. Es genügt lediglich auf die Unterschiede einzugehen. Beim Topf 20' von Fig. 8 hat der Topfboden 23' eine Breite 46, die wesentlich größer als die lichte Weite 47 der zugehörigen Topföffnung 21 ausgebildet ist. Die Topfseitenwände 22' verlaufen geneigt und erweitern sich zum Schalenboden 23' hin.

Die Fig. 9 und 10 zeigen ein drittes Ausführungsbeispiel eines Topfes 20" nach der Erfindung. Auch in diesem Fall genügt es lediglich auf die Unterschiede einzugehen, wobei die entsprechenden Bauteile mit den gleichen Bezugszeichen wie im ersten Ausführungsbeispiel versehen sind, aber zur Unterscheidung davon mit einem Doppelstrich (") gekennzeichnet sind.

Auch in diesem Fall besitzt der Topfboden 23" eine größere Breite 48 als sie der lichten Weite 49 der Schalenöffnung 21" entspricht. Dies kommt beim Topf 20" durch eine Ausbauchung 39 der einen Topfseitenwand 32" zustande. Mit einem solchen Topf 20" ist es möglich, entsprechend profilierte ausgebauchte Aufnahmen 13 in der Fahrzeug-Karosserie 10 auszufüllen. Natürlich können solche Töpfe 20 bis 20" als von der Karosserie 10 unabhängige Behältnisse verwendet werden.

Auch beim Topf 20" von Fig. 9 und 10 gibt es Überlappungen 40" im Bereich der Trennfugen 14", 15". Diese Überlappungen 40" bestehen in analoger Weise aus Flanschen 41 " und Abflachungen 42". Die Trennfugen 14" und 15" verlaufen beim Formteil 20" durch die Ausbauchung 39 hindurch und scheiden so die gegeneinander klappbeweglichen ausgebauchten Topfsegmente 11", 12". Auch in diesem Fall verlaufen die Trennfugen 14", 15" über die ganze Länge der Seitenwände 22". Dadurch liegt die als Klappachse fungierende Biegelinie 28" im Schalenboden 23" und verbindet die beiden Innenenden der Trennfugen 14", 15".

### Bezugszeichenliste :

- 10: Fahrzeug-Karosserie (Fig. 1)
- 11: erstes Topfsegment von 20 (Fig. 6)
- 11": erstes Topfsegment von 20" (Fig. 9, 10)
- 12: zweites Topfsegment von 20 (Fig. 6)
- 12": zweites Topfsegment von 20' (Fig. 8, 9)
- 13: napfförmige Aufnahme in 10 (Fig. 1)
- 14: erste Trennfuge in 20 (Fig. 1 bis 3)
- 14": erste Trennfuge von 20" (Fig. 9, 10)
- 15: zweite Trennfuge von 20 (Fig. 1 bis 3)
- 15": zweite Trennfuge von 20" (Fig. 9, 10)
- 16: Napfboden von 13
- 17: Versatzstrecke für 24 bei 11 (Fig. 6)
- 18: äußeres Fugenende von 14, 15 (Fig. 1)
- 19: inneres Fugenende von 14, 15 (Fig. 1)
- 20: topfförmiges Formteil, Topf (Fig. 1 bis 7)
- 20': erste Alternative von 20 (Fig. 8)
- 20": zweite Alternative von 20 (Fig. 9, 10)
- 20.1: Aufklapplage von 11, 12 (Fig. 6)
- 20.2: Zuklapplage von 11, 12, (Fig. 7)
- 21: Topföffnung von 20
- 21': Topföffnung von 20'
- 21": Topföffnung von 20"
- 22: Topfseitenwand von 20
- 22': Topfseitenwand von 20'
- 22": Topfseitenwand von 20"
- 23: Topfboden von 20
- 23': Topfboden von 20'
- 23": Topfboden von 20"
- 24: Randflansch an 22 (Fig. 1)
- 25: Außenende von 20 (Fig. 2)
- 26: Innenende von 20 (Fig. 2)
- 27: Pfeil der Klappbewegung zwischen 11, 12 (Fig. 6)
- 28: Biegelinie zwischen 14, 15 (Fig. 3)
- 28": Biegelinie zwischen 14", 15" (Fig. 10)
- 29: Topftiefe von 20 (Fig. 1)
- 30: ebenes textiles Flächengebilde, Vliesstoff (Fig. 4)
- 30': verformtes Material von 30 (Fig. 5)
- 31: Oberwerkzeug der Presse (Fig.4, 5) =
- 32: Unterwerkzeug der Presse (Fig. 4, 5)
- 33: patrizenförmiges Profil von 11, 12 (Fig. 4)
- 34: matrizenförmiges Profil von 11, 12 (Fig. 4)
- 35: Abstandsbereich zwischen 31, 32 (Fig. 4)
- 36: Tiefziehstrecke von 30 bei 30' (Fig. 5)
- 37: Schichtdicke von 30 (Fig. 4)
- 38: Mindestwandstärke von 30' (Fig. 5)
- 39: Ausbauchung von 22" (Fig. 9)
- 40: Überlappung von 22 (Fig. 2, 3, 3a, 7)
- 40": Überlappung von 22" (Fig. 10)
- 41: vorspringender Flansch an 22 bei 11 (Fig. 3, 6)
- 41": Flansch an 22" (Fig. 9, 10)
- 42: vertiefte Abflachung an 22 (Fig. 3, 6)
- 42": vertiefte Abflachung an 22" (Fig. 9, 10)
- 43: Kante von 11 bei 14 (Fig. 3a)
- 44: Rand von 12 bei 14 (Fig. 3)
- 45: Außenfläche von 22 (Fig. 3a)
- 46: Breite von 23' (Fig. 8)
- 47: lichte Weite von 21' (Fig. 8)
- 48: Breite von 23" (Fig. 9)
- 49: lichte Weite von 21" (Fig. 9)

## Patentansprüche

1. Verfahren zum Herstellen eines Formteils (20) aus einem einstückigen textilen Flächengebilde (30),
indem aus dem Flächengebilde (30) zunächst in nebeneinanderliegenden Werkzeug-Abschnitten eines zweiteiligen Werkzeugs (31, 32) zwei Formteil-Hälften (11, 12) geformt werden, die sich im Werkzeug (31, 32) zunächst in einer Aufklapplage (20.1) befinden,
wobei im Flächengebilde (30) zwischen den beiden Formteil-Hälften (11, 12) eine Biegelinie (28) gebildet wird,
und dann die beiden Formteil-Hälften (11, 12) entlang der Biegelinie (28) gegeneinander geklappt (27) werden, bis in der Zuklapplage (20.2) die Umrisslinien der Formteil-Hälften (11, 12) einander berühren,
wobei die Berührungsstellen der Umrisshälften durch Bindemittel aneinander befestigt werden und aus den Formteil-Hälften (11, 12) das fertige Formteil (20) entsteht,
wobei aus dem Flächenmaterial (30) im Werkzeug (31, 32) zwei Segmente (11, 12) eines Topfes (20) hergestellt werden,
wobei der Topf (20) eine freie Topföffnung (21), einen der Topföffnung (21) gegenüberliegenden Topfboden (23) und paarweise einander gegenüberliegende Topfseitenwände (22) besitzt,
wobei ein Paar dieser Topfseitenwände (22) im Werkzeug (31, 32) längsteilig hergestellt wird, wodurch Trennfugen (14, 15) an den beiden längsteiligen Topfseitenwänden (22) entstehen,
wobei der Topfboden (23) zwar die beiden Topfsegmente (11, 12) fest
miteinander verbindet, aber in der Aufklapplage (20.1) der Topfsegmente (11, 12) im Werkzeug (31, 32) abgewinkelt verläuft,
wobei die beiden Topfsegmente (11, 12) im Werkzeug (31, 32) an den beiden Winkelschenkeln des Topfbodens (23) im Winkel zueinander geformt werden, indem das Flächenmaterial (30) lediglich gemäß der Teilhöhe (36) der abgewinkelt verlaufenden längsteiligen Topfseitenwände (22) im Werkzeug (31, 32) tiefgezogen wird,
wobei vom Winkelscheitel des Topfbodens (23) die künftige Biegelinie (28) zwischen den beiden Topfsegmenten (11, 12) gebildet wird
und wobei beim Zusammenklappen (27) der fertigen, aus dem Werkzeug (31, 32) entnommenen Topfsegmente (11, 12) der Winkel im Topfboden (23) gestreckt wird, bis die Trennfugen (14, 15) zwischen den beiden längsteiligen Topfseitenwänden (22) einander berühren.

2. Verfahren nach Anspruch 1, **dadurch gekennzeichnet, dass** im Werkzeug (31, 32) im Bereich der Topföffnung (21) aus dem Flächengebilde (30) Segmente eines Randflansches (24) an die beiden Topfsegmente (11, 12) angeformt werden.

3. Verfahren nach Anspruch 1 oder 2, **dadurch gekennzeichnet, dass** im Werkzeug (31, 32) aus dem Flächengebilde (30) Überlappungen (40) an den Trennfugen (14, 15) der längsteiligen Topfseitenflächen (22) angeformt werden
und dass beim Zuklappen (27) der fertigen Topfsegmente (11, 12) die Überlappungen (40) bereichsweise die benachbarte Topfseitenwand (22) überdecken.

4. Verfahren nach Anspruch 3, **dadurch gekennzeichnet, dass** die Überlappungen (40) aus einer tiefer liegenden Formfläche (42) und aus einem vorspringenden Flansch (41) gebildet werden.

5. Verfahren nach Anspruch 4, **dadurch gekennzeichnet, dass** der Flansch (41) an der Kante (43) der Trennfuge (14, 15) des einen Topfsegments angeformt wird, während die Abflachung (42) am Rand (44) des benachbarten Topfsegments (12) gebildet wird.

6. Verfahren nach einem der Ansprüche 1 bis 5, **dadurch gekennzeichnet, dass** nach dem Zusammenklappen (27) der beiden Topfsegmente (11, 12) die Trennfugen (14, 15) und/oder die Überlappungen (40) durch Bindemittel aneinander befestigt werden.

7. Verfahren nach einem der Ansprüche 1 bis 6, **dadurch gekennzeichnet, dass** nach dem Zusammenklappen (27) der Topfsegmente ein Topf (20'; 20") gebildet wird, wo - von der Schalenöffnung (21'; 21") aus gesehen - die Topfseitenwand (22'; 22") wenigstens bereichsweise eine Hinterschneidung besitzt,
und dass der Topfboden (23') gegenüber der lichten Weite (47, 49) der Topföffnung (21'; 21 ") größer ausgebildet wird.

8. Verfahren nach Anspruch 7, **dadurch gekennzeichnet, dass** die Hinterschneidung durch ein Ausbauchen (39) der Seitenwand (22") erzeugt wird.

9. Verfahren nach einem der Ansprüche 1 bis 8, **dadurch gekennzeichnet, dass** ein Vliesstoff (30) oder ein Nadelfilz hergestellt und als textiles Flächengebilde im Werkzeug (31, 32) verwendet wird.

## Claims

1. Method of fabrication of a molded part (20) made of a one-piece planar textile fabric (30),
in that out of the textile fabric (30) formed first of all in adjacent tool sections of a two-pieced tool (31, 32) are two molded-part halves (11, 12) found first of all in a flipped-open position (20.1) in the tool (31, 32),
whereby between the two molded-part halves (11, 12) in the textile fabric (30) a bending line (28) is formed,
and then both molded-part halves (11, 12) are flipped together (27) along the bending line (28) until, in the closed position (20.2), the contours of the molded-part halves (11, 12) come into contact with one another,
whereby the contact points of the molded-part halves are attached to each other by means of bonding agents, and created thereby from the molded-part halves (11, 12) is the finished molded-part (20),
whereby fabricated from the surface material (30) in the tool (31, 32) are two segments (11, 12) of a vessel (20),
whereby the vessel (20) has a free vessel opening (21), a vessel floor (23) lying opposite the vessel opening (21), and vessel side-walls (22) lying opposite one another pairwise,
whereby a pair of these vessel side-walls (22) is fabricated in the tool (31, 32) divider-like, whereby interstices (14, 15) are developed on both vessel side-walls (22),
whereby although the vessel floor (23) firmly connects both of the vessel segments (11, 12) to each other, it runs at an angle in the tool (31, 32) when the vessel segments (11, 12) are in open position (20.1),
whereby both vessel segments (11, 12) are formed in the tool (31, 32) at an angle to one another at both of the vessel floor (23) angle legs in that the surface material (30) is deep-drawn in the tool (31, 32) only corresponding to the partial height (36) of the angled-running, divider-like vessel side-walls (22),
whereby the forthcoming bending line (28) between both vessel segments (11, 12) is formed by the angle leg of the vessel floor (23),
and whereby, when flipping together (27) the finished vessel segments (11, 12) removed from the tool (31, 32), the angle in the vessel floor (23) is stretched until the interstices (14, 15) between both divider-like vessel side-walls (22) touch each other.

2. Method pursuant to Claim 1, thereby **characterized in that** in the tool (31, 32), in the area of the vessel opening (21), segments of a rim flange (24) are formed on both of the vessel segments (11, 12) by the textile fabric (30).

3. Method pursuant to Claim 1 or 2, thereby **characterized in that** in the tool (31, 32), overlaps (40) are formed on the interstices (14, 15) of the divider-like vessel side-walls (22) by the textile fabric (30),
and **in that** when flipping (27) the finished vessel segments (11, 12) together, the overlaps (40) cover the adjacent vessel side-wall (22) in places.

4. Method pursuant to Claim 3, thereby **characterized in that** the overlaps (40) are formed by a deeper-lying molded surface (42) and by a protruding flange (41).

5. Method pursuant to Claim 4, thereby **characterized in that** the flange (41) is formed on the angle (43) of the interstice (14, 15) of one of the vessel segments, while the flattening (42) is formed on the edge (44) of the adjacent vessel segment (12).

6. Method pursuant to one of the claims 1 to 5, thereby **characterized in that** subsequent to flipping together (27) both vessel segments (11, 12) the interstices (14, 15) and or the overlaps (40) are fastened together by means of bonding agent.

7. Method pursuant to one of the claims 1 to 6, thereby **characterized in that** subsequent to flipping together (27) the vessel segments, a vessel (20'; 20") is formed where - as seen from the shell opening (21'; 21") - the vessel side-wall (22'; 22") has, at least in places, an undercut,
and **in that** the vessel floor (23') is designed larger opposite the inner width (47, 49) of the vessel opening (21'; 21").

8. Method pursuant to Claim 7, thereby **characterized in that** the undercut is generated by a bulging (39) of the side-wall (22").

9. Method pursuant to one of the claims 1 to 8, thereby **characterized in that** a nonwoven fabric (30) or a needle-felt is produced and used as a textile fabric in the tool (31, 32).

## Revendications

1. Méthode de fabrication d'une pièce moulée (20) à partir d'une structure textile plane (30) d'un seul tenant,
consistant dans un premier temps à mouler à partir de la structure plane (30) deux moitiés (11, 12) de pièce dans des segments juxtaposés d'un moule (31, 32) en deux parties, moitiés qui dans le moule (31, 32) se trouvent dans un premier temps en position basculée ouverte (20.1),
sachant qu'une ligne de flexion (28) est formée dans la structure plane (30) entre les deux moitiés (11, 12) de la pièce moulée,
et qu'ensuite l'on fait basculer (27) les deux moitiés (11, 12) de la pièce moulée l'une contre l'autre le long d'une ligne de flexion (28), jusqu'à ce qu'en position fermée après basculement (20.2) les lignes de contour des moitiés (11,12) de la pièce moulée se touchent,
sachant que les zones d'entrée en contact que comportent les moitiés de contour sont fixées les unes contre les autres par un liant et que la pièce moulée finie (20) naît des deux moitiés (11, 12) de la pièce,
sachant qu'à partir de la structure plane (30) présente dans le moule (31, 32) sont fabriqués deux segments (11, 12) d'un pot (20),
sachant que le pot (20) présente un orifice libre (21), un fond (23) situé en face de l'orifice (21) du pot et des parois latérales (22) opposées les unes aux autres par paires,
sachant qu'une paire de ces parois latérales (22) du pot est fabriquée longitudinalement dans le moule (31, 32), ceci entraînant la naissance de joints de séparation (14, 15) contre les deux parois latérales (22) longitudinales du pot,
sachant que le fond (23) du pot relie certes fermement les deux segments (11, 12) du pot, mais que lorsque les segments (11, 12) du pot se trouvent en position basculée ouverte (20.1), ce fond présente dans le moule (31, 32) un tracé coudé,
sachant que les deux segments (11, 12) du pot dans le moule (31, 32) sont moulés en angle l'un vers l'autre, contre les deux branches angulaires du fond (23) du pot, simplement en emboutissant dans le moule (31, 32) la structure plane (30) conformément à la hauteur partielle (36) des parois latérales (22) longitudinales du pot qui présentent un tracé coudé,
sachant que la future ligne de flexion (28) entre les deux segments (11, 12) de pot est formée par le sommet d'angle du fond (23) du pot,
sachant que lorsque l'on fait basculer, pour les réunir (27), les segments (11, 12) du pot achevés prélevés du moule (31, 32), l'angle que forme le fond (23) du pot est étiré jusqu'à ce que jes joints de séparation (14, 15) se touchent entre les deux parois latérales (22) longitudinales du pot.

2. Procédé selon la revendication 1, **caractérisé en ce que** dans le moule (31, 32), dans la zone de l'orifice (21) du pot, des segments d'un flasque périmétrique (24) sont moulés à partir de la structure plane (30) contre les deux segments (11, 12) du pot.

3. Procédé selon la revendication 1 ou 2, **caractérisé en ce que** dans le moule (31, 32) sont moulés, à partir de la structure plane (30), des chevauchements (40) contre les joints de séparation (14, 15) des surfaces latérales (22) longitudinales du pot
et **en ce que** lorsqu'on bascule les segments (11, 12) de pot finis jusqu'en position fermée (27), les chevauchements (40) recouvrent localement la paroi latérale (22) de pot voisine.

4. Procédé selon la revendication 3, **caractérisé en ce que** les chevauchements (40) sont formé à partir d'une surface de moulage (42) située plus bas et d'un flasque (41) en saillie.

5. Procédé selon la revendication 4, **caractérisé en ce que** le flasque (41) est moulé contre l'arête (43) du joint de séparation (14, 15) que comporte un segment de pot, tandis que la surface aplatie (42) est formée sur le bord (44) du segment (12) de pot voisin.

6. Procédé selon l'une des revendications 1 à 5, **caractérisé en ce qu'**après avoir basculé les deux segments (11, 12) de pot en position assemblée (27), les joints de séparation (14, 15) et/ou les chevauchements (40) sont fixés ensemble par un liant.

7. Procédé selon l'une des revendications 1 à 6, **caractérisé en ce qu'**après avoir basculé les segments de pot pour les réunir (27), un pot (20' ; 20") est formé sur lequel la paroi latérale (22' ; 22") du pot présente - observée depuis l'orifice (21' ; 21 ") - au moins localement une contre-dépouille
et **en ce que** le fond (23') du pot est configuré de plus grande taille que l'ouverture libre (47, 49) de l'orifice (21' ; 21") du pot.

8. Procédé selon la revendication 7, **caractérisé en ce que** la contre-dépuille est générée par bombement (39) de la paroi latérale (22").

9. Procédé selon l'une des revendications 1 à 8, **caractérisé en ce qu'**est fabriqué un matériau non tissé (30) ou un feutre aiguilleté et qu'il sert de structure textile plane dans le moule (31, 32).
